# FASCICULE DE BREVET EUROPEEN

(11) **EP 1 220 000 B1**
(45) Date de publication et mention de la délivrance du brevet: **30.01.2008**
(21) Numéro de dépôt: 01403272.6
(22) Date de dépôt: 17.12.2001
(51) Int. Cl.: G02B 6/44

(54) **Câble à fibres optiques et procédé de fabrication de ce câble**
Faseroptisches Kabel und zugehöriges Herstellungsverfahren
Optical fiber cable and method of fabrication for such a cable

(30) Priorité: 28.12.2000 FR 0017190
(43) Date de publication de la demande: 03.07.2002
(73) Titulaire: Draka Comteq B.V., 1083 HJ Amsterdam (NL)
(72) Inventeur: Bourget, Vincent, 78160 Marly le Roi (FR)
(74) Mandataire: Blokland, Arie

(56) Documents cités:
- EP-A- 0 033 123
- EP-A- 0 846 970
- EP-A1- 0 276 762
- FR-A- 2 394 157
- US-A- 4 814 133
- US-A- 5 448 670

## Description

La présente invention concerne un câble à fibres optiques et un procédé de fabrication de ce câble.

Les câbles à fibres optiques, appelés par la suite câbles optiques, présentent habituellement trois types de structure.

Selon un premier type de structure, le câble optique comprend un porteur filiforme central autour du quel sont assemblés des tubes en hélice ou en SZ dans lesquels sont logées des fibre optiques. L'assemblage de tubes est revêtu d'une gaine. Dans ce premier type de structure, les tubes contenant les fibres optiques sont délimités par des parois relativement épaisses et rigides en matériau synthétique. Des déplacements relatifs entre les fibres optiques et les tubes qui les contiennent sont possibles. Des câbles présentant une structure du premier type sont décrits par exemple dans les documents US-A-4 366 667, et EP-A-0 846 970 et US-A-4 814 133.

Selon un deuxième type de structure, le câble optique comprend un tube unique, appelé habituellement « uni-tube », en matériau synthétique, dans lequel sont logées des fibre optiques et, le cas échéant, des rubans éventuellement assemblés entre eux en hélice. Cet uni-tube est revêtu d'une gaine délimitée par une paroi dans laquelle sont éventuellement noyés des porteurs filiformes.

Selon le troisième type de structure, le câble optique comprend des tubes en matériau synthétique, dans lesquels sont logées des fibre optiques, assemblés entre eux en hélice ou en SZ. L'assemblage de tubes est revêtu d'une gaine délimitée par une paroi dans laquelle sont noyés des porteurs filiformes . Dans ce troisième type de structure, les tubes contenant les fibres optiques, relativement fins et souples, enserrent les fibres optiques qu'il contiennent en empêchant pratiquement tout déplacement relatif entre les fibres optiques et les tubes qui les contiennent.

Habituellement, dans les trois types de structure, la gaine, en matériau synthétique, est extrudée autour de ce qui est appelé couramment l'âme optique (cette âme optique comprend notamment, dans le premier type de structure : le porteur filiforme et les tubes, dans le deuxième type de structure : l'uni-tube et les éventuels rubans et dans le troisième type de structure : l'assemblage de tubes).

Le porteur filiforme est fabriqué par exemple en acier ou en matériau composite comprenant de la résine et des fibres de verre. Le coefficient de dilatation du porteur est relativement faible. Par contre, le porteur est en contact longitudinal avec au moins un organe, dit organe jointif, dont le coefficient de dilatation est relativement élevé, en général 100 fois supérieur au coefficient de dilatation du porteur. Selon le type de la structure du câble optique, l'organe jointif est un tube, en général en polypropylène (PP) ou en polytéréphtalate de butylène (PBTP), voire en polyéthylène, contenant les fibres optiques (premier type de structure du câble optique) ou le matériau de la gaine (deuxième et troisième type de structure du câble optique), en général en polyéthylène (PE) ou en polyamide (PA).

Par conséquent, lorsqu'un câble est soumis à des écarts de températures importants, la différence entre les coefficients de dilatation du porteur et de chaque organe jointif engendre des disparités de comportement des différents éléments constituant un câble.

Pour remédier aux disparités de dilatations, il est possible, par exemple dans les câbles optiques ayant une structure du premier ou du troisième type, de réduire le pas de l'assemblage en hélice ou en SZ des tubes afin d'augmenter la longueur des tubes par unité de longueur du porteur. Toutefois, cette solution est relativement coûteuse car la réduction du pas de l'assemblage en hélice ou en SZ des tubes conduit à une augmentation de la longueur des fibres optiques par unité de longueur du câble.

Les câbles optiques ayant une structure du premier ou du troisième type comprennent généralement des filins de maintien des tubes susceptibles d'atténuer les écarts de dilatations entre le ou les porteur(s) et les tubes. Toutefois, les effets des filins de maintien sur l'atténuation des écarts de dilatation sont insuffisants.

L'invention a notamment pour but d'atténuer efficacement, dans un câble optique, les écarts de dilatations entre chaque porteur filiforme et chaque organe jointif en contact longitudinal avec ce porteur.

A cet effet, l'invention a pour objet un câble à fibres optiques comme défini dans la revendication 1 ou 4.

Suivant des caractéristiques de différents modes de réalisation de ce câble à fibres optiques :
- le porteur est noyé dans une gaine formant un logement pour les fibres optiques, le porteur étant muni des stries d'augmentation d'adhérence avec le matériau de la gaine qui l'entoure, cette gaine formant l'organe jointif ;
- le câble comprend un assemblage d'au moins deux tubes, dans lesquels sont logés les fibres optiques, l'assemblage de tubes étant logé dans la gaine ;
- les tubes s'étendent dans la gaine suivant un assemblage en hélice ou en SZ ;
- le câble comprend au moins deux tubes, dans lesquels sont logés les fibres optiques, assemblés autour du porteur, chaque tube formant un organe jointif ;
- les tubes s'étendent autour du porteur suivant un assemblage en hélice ou en SZ ;
- le porteur est muni des stries d'augmentation de frottement avec les tubes ;
- chaque tube est muni des stries d'augmentation de frottement avec le porteur.

L'invention a également pour objet un procédé de fabrication d'un câble à fibres optiques tel que défini ci-dessus, caractérisé en ce que l'on forme les stries d'augmentation de frottement ou d'adhérence sur un élément choisi parmi le porteur et l'organe jointif, à l'aide de moyens de moletage de cet élément.

Suivant d'autres caractéristiques de ce procédé de fabrication d'un câble à fibres optiques :
- le porteur est fabriqué dans un matériau composite comprenant de la résine et des fibres de verre et le moletage est réalisé sur la surface externe de ce porteur ramollie par chauffage de cette surface externe du porteur ou chauffage des moyens de moletage ;
- chaque tube étant en matériau synthétique, le moletage est réalisé sur la surface externe de chaque tube à la sortie d'une tête d'extrusion du tube ;
- chaque tube est en matériau synthétique et le moletage est réalisé sur la surface externe de chaque tube lors de l'assemblage de ce tube avec le porteur, la surface externe de ce tube étant ramollie par chauffage de cette surface externe du tube ou chauffage des moyens de moletage ;
- les moyens de moletage comprennent au moins une roue de moletage munie d'une gorge périphérique délimitée par une surface moletée destinée à venir contact avec l'élément choisi parmi le porteur et l'organe jointif.

L'invention sera mieux comprise à la lecture de la description qui va suivre, donnée uniquement à titre d'exemple et faite en se référant aux dessins annexés dans lesquels :
- la figure 1 est une vue en coupe transversale d'un câble optique selon un premier mode de réalisation de l'invention ;
- la figure 2 est une vue de côté de moyens de moletage d'un premier élément du câble optique représenté sur la figure 1 ;
- la figure 3 est une vue suivant la flèche 3 de la figure 2 des moyens de moletage ;
- la figure 4 est une vue d'un second élément du câble optique muni de stries d'augmentation de frottement ou d'adhérence avec un organe jointif ;
- la figure 5 est une vue similaire à la figure 1 d'un câble optique selon un second mode de réalisation de l'invention.

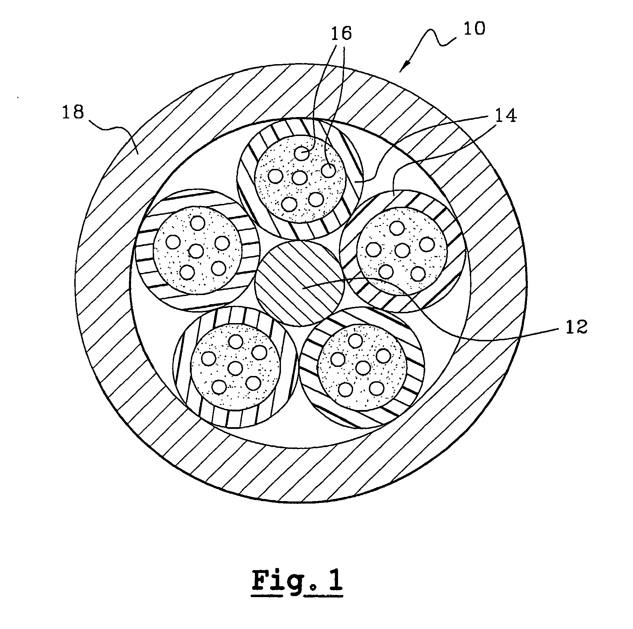

On a représenté schématiquement sur la figure 1 un câble à fibres optiques selon un premier mode de réalisation de l'invention, désigné par la référence générale 10.

Ce câble optique 10 comprend un porteur filiforme 12 autour duquel sont assemblés des tubes 14, par exemple au nombre de cinq. Un faisceau de fibres optiques classiques 16 est logé dans chaque tube 14. Chaque tube 14 comprend par exemple une douzaine de fibres optiques 16. Toutefois, le nombre de fibres optiques 16 peut être différent.

L'assemblage comprenant le porteur 12 et les tubes 14 est revêtu d'une gaine 18 en matériau synthétique thermoplastique classique, par exemple en polyéthylène (PE) ou en polyamide (PA). De préférence, les tubes 14 s'étendent dans la gaine 18 suivant un assemblage classique en hélice ou en SZ.

Le porteur filiforme 12 est fabriqué en matériau composite comprenant de la résine et des fibres de verre. En variante, le porteur 12 peut être fabriqué en acier. Le coefficient de dilatation du matériau du porteur 12 est relativement faible.

Les tubes 14, fabriqués dans un matériau synthétique thermoplastique classique, par exemple en polypropylène (PP) ou en polytéréphtalate de butylène (PBTP), voire en polyéthylène, sont en contact longitudinalement avec le porteur 12. Le coefficient de dilatation du matériau des tubes 14 est relativement élevé, en général environ 100 fois supérieur au coefficient de dilatation du porteur 12.

Les surfaces externes du porteur 12 et des tubes 14 sont munies de stries 20 d'augmentation de frottement entre le porteur 12 et les tubes 14. Par « stries », on entend un ensemble de petits sillons, séparés entre eux par des petites arêtes saillantes, qui ne sont pas nécessairement parallèles entre eux ou répartis régulièrement.

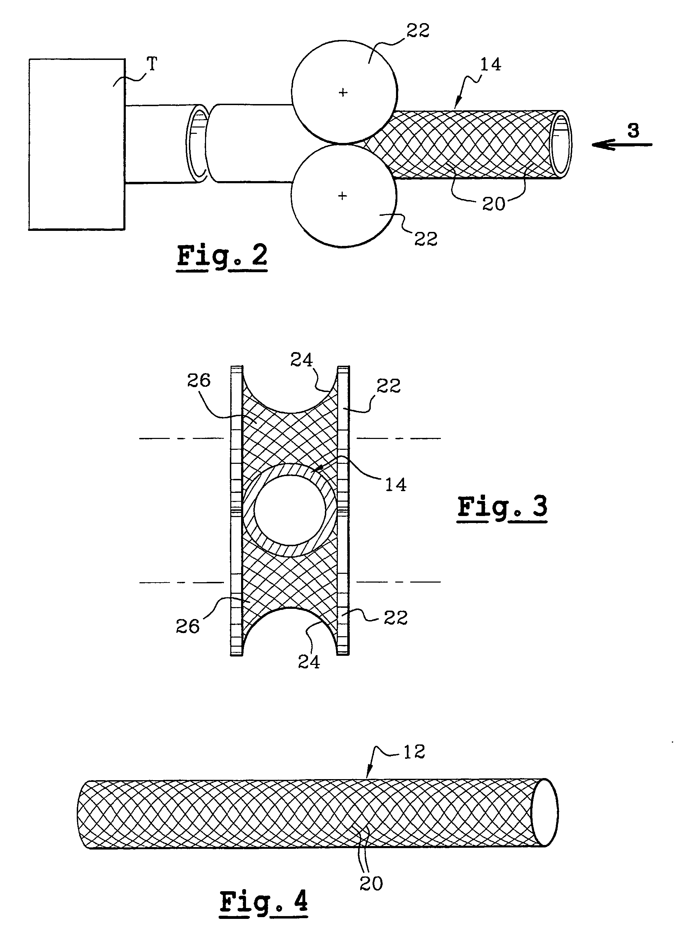

De préférences, les stries 20 sont formées par moletage, par exemple à l'aide des moyens illustrés sur les figures 2 et 3.

Sur ces figures, on a représenté des moyens de moletage d'un tube 14. Ces moyens de moletage comprennent deux roues de moletage 22 superposées, d'axes parallèles sensiblement orthogonaux à l'axe du tube 14. Chaque roue de moletage 22 est munie d'une gorge périphérique 24 délimitée par une surface moletée 26 destiné à venir en contact avec la surface externe du tube 14. La surface moletée est destinée à imprimer une empreinte complémentaire sur la surface externe du tube 14.

Chaque roue de moletage 22 est destinée à moleter sensiblement une moitié longitudinale correspondante du tube 14.

Les roues de moletage 22 sont placées par exemple à la sortie d'une tête T d'extrusion du tube 14. Dans ce cas, la température de la surface externe du tube 14 est encore relativement élevée ce qui facilite le moletage de cette surface externe. Les roues de moletage 22 sont auto-entraînées par le déplacement du tube 14 à la sortie de la tête d'extrusion T.

En variante, le moletage de la surface externe du tube 14 peut être réalisé lors de l'assemblage de ce tube 14 avec le porteur 12. Dans ce cas, conformément à un procédé classique, le tube 14 est déroulé d'une bobine de stockage pour être enroulé en hélice ou en SZ autour du porteur 12. Les roues de moletage 22 sont placées au contact d'un tronçon du tube 14 s'étendant entre la bobine de stockage et le porteur 12. De préférence, afin de faciliter le moletage, la surface externe du tube 12 est ramollie par chauffage de cette surface externe ou chauffage des roues de moletage 22.

Le moletage de la surface externe du porteur 12 en matériau composite (voir figure 4) est réalisé à l'aide de roues de moletage analogues à celle représentées sur les figures 2 et 3. De préférence, le moletage est réalisé sur la surface externe du porteur 12 ramollie par chauffage de cette surface externe ou chauffage des roues de moletage.

En variante, le moletage peut être réalisé seulement sur les tubes 14.

Au moins une des surfaces externes du porteur 12 et de chaque tube 14 étant munie de stries d'augmentation de frottement, la cohésion entre le porteur 12 et les tubes 14 est renforcée. Ainsi, le comportement relativement à la dilatation de l'assemblage comprenant le porteur 12 et les tubes 14 se rapproche du comportement relativement à la dilatation du porteur 12. Ceci permet de diminuer les disparités de dilatation des différents éléments constituant l'assemblage du câble optique.

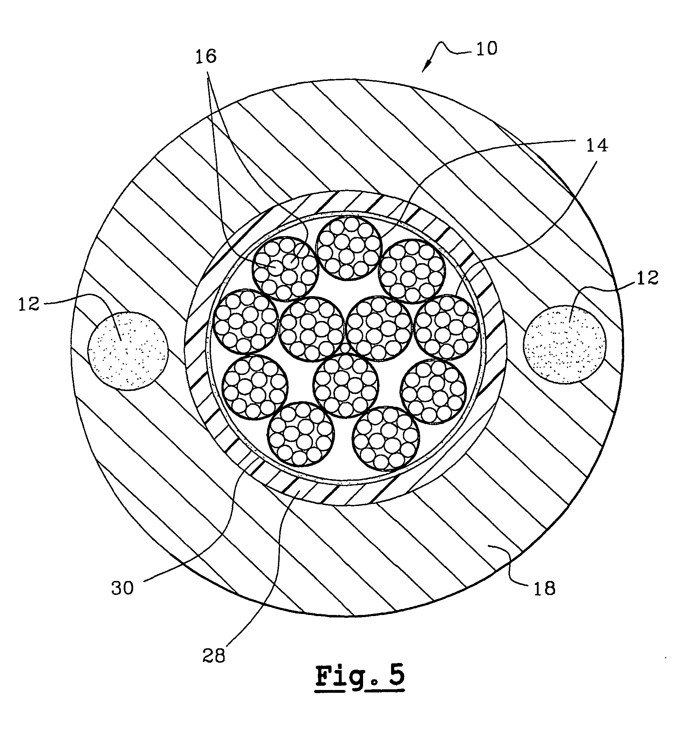

On a représenté schématiquement sur la figure 5 un câble à fibres optiques 10 selon un second mode de réalisation de l'invention. Sur cette figure, les éléments analogues à ceux des figures précédentes sont désignés par des références identiques.

Ce câble optique 10 comprend un assemblage de tubes souples 14 dans chacun desquels est logé un faisceau de fibres optiques classiques 16. Chaque tube 14 comprend par exemple une douzaine de fibres optiques 16. Toutefois, le nombre de fibres optiques 16 peut être différent.

Dans l'exemple illustré, le câble optique 10 comprend douze tubes 14. Toutefois, le nombre de tubes 14 peut être différent.

L'assemblage de tubes 14 est revêtu d'une gaine 18. De préférence, les tubes 14 s'étendent dans la gaine 18 suivant un assemblage classique en hélice ou en SZ.

Dans ce second mode de réalisation de l'invention, le câble optique 10 comprend deux porteurs filiformes 12, diamétralement opposés, noyés dans la paroi délimitant la gaine 18.

De préférence, le câble optique 10 comprend des mèches de renfort mécanique 28, par exemple en aramide, s'étendant radialement entre les tubes 14 et la gaine 18 suivant un assemblage annulaire, par exemple en hélice.

De préférence également, le câble optique 10 comprend des éléments d'étanchéité classiques. De tels éléments d'étanchéité peuvent comprendre notamment un ruban d'étanchéité 30 s'étendant radialement entre les tubes 14 et la gaine 18, plus particulièrement entre les tubes 14 et l'assemblage de mèches de renfort 28, suivant un assemblage classique annulaire.

Les porteurs 12, les tubes 14 et la gaine 18 sont fabriqués dans des matériaux analogues à ceux évoqués dans le premier mode de réalisation de l'invention. Le coefficient de dilatation du matériau de la gaine 18 est relativement élevé, en général environ 100 fois supérieur au coefficient de dilatation du matériau des porteurs 12.

On notera toutefois que, dans ce second mode de réalisation de l'invention, la paroi des tubes 14 est relativement fine comme cela est le cas habituellement pour les tubes 14 d'un câble optique du type à porteurs agencés à la périphérie de l'assemblage de tubes.

Dans ce second mode de réalisation de l'invention, les surfaces externes des porteurs 12 sont munies de stries 20 telles que celles représentées sur la figure 4. Ces stries 20, formées par moletage de façon analogue au premier mode de réalisation de l'invention, sont destinées à augmenter l'adhérence entre les porteurs 12 et le matériau constituant la gaine 18.

Les surfaces externes des porteurs 12 étant munies de stries d'augmentation d'adhérence, la cohésion entre les porteurs 12 et la gaine 18 est renforcée. Ainsi, le comportement relativement à la dilatation de l'ensemble comprenant les porteurs 12 et la gaine 18 se rapproche du comportement relativement à la dilatation des porteurs 12. Ceci permet de diminuer les disparités de dilatation des différents éléments constituant le câble optique.

Bien entendu, l'invention s'applique également aux porteurs noyés dans la gaine d'un câble optique de type « uni-tube » décrits dans le préambule de ce mémoire.

Parmi les avantages de l'invention, on notera que celle-ci permet d'atténuer efficacement, dans un câble optique, les écarts de dilatations entre chaque porteur filiforme et chaque organe jointif en contact longitudinal avec ce porteur, ceci à l'aide de moyens très simples et faciles à mettre en oeuvre.

## Revendications

1. Câble (10) à fibres optiques (16) comprenant au moins deux tubes (14) dans lesquels sont logées les fibres optiques (16) et au moins un porteur filiforme (12) en matériau à faible coefficient de dilatation noyé dans la gaine (18) à coefficient de dilatation élevé, **caractérisé en ce que** le porteur (12) est muni de stries (20), formées par moletage, d'augmentation de frottement ou d'adhérence entre le porteur (12) et la gaine (18) qui l'entoure.

2. Câble (10) selon la revendication 1, **caractérisé en ce qu'**il comprend un assemblage d'au moins deux tubes (14), dans lesquels sont logées les fibres optiques (16), l'assemblage de tubes (14) étant logé dans la gaine (18).

3. Câble (10) selon la revendication 2, **caractérisé en ce que** les tubes (14) s'étendent dans la gaine (18) suivant un assemblage en hélice ou en SZ.

4. Câble (10) à fibres optiques (16) comprenant une gaine (18) formant un logement pour les fibres optiques (16) et au moins un porteur filiforme (12) en matériau à faible coefficient de dilatation en contact longitudinalement avec les tubes (14), lesdits tubes (14) étant assemblés autour du porteur (12), **caractérisé en ce que** les tubes (14) ou le porteur (12) et les tubes (14) comportent chacun une surface externe de contact, munie de stries (20) d'augmentation de frottement ou d'adhérence entre le porteur (12) et les tubes (14).

5. Câble (10) selon la revendication 4, **caractérisé en ce que** les tubes (14) s'étendent autour du porteur (12) suivant un assemblage en hélice ou en SZ.

6. Câble (10) selon la revendication 4 ou 5, **caractérisé en ce que** le porteur (12) est muni des stries (20) d'augmentation de frottement avec les tubes (14).

7. Procédé de fabrication d'un câble (10) selon l'une quelconque des revendications 1-3, **caractérisé en ce que** l'on forme les stries (20) d'augmentation de frottement ou d'adhérence sur le porteur (12), à l'aide de moyens (22) de moletage du porteur (12).

8. Procédé selon la revendication 7, **caractérisé en ce que** le porteur (12) est fabriqué dans un matériau composite comprenant de la résine et des fibres de verre et **en ce que** le moletage est réalisé sur la surface externe de ce porteur (12) ramollie par chauffage de cette surface externe du porteur (12) ou chauffage des moyens de moletage (22).

9. Procédé selon la revendications 8 ou 9, **caractérisé en ce que** chaque tube (14) est en matériau synthétique.

10. Procédé selon l'une quelconque des revendications 7 à 9, **caractérisé en ce que** les moyens de moletage comprennent au moins une roue (22) de moletage munie d'une gorge périphérique (24) délimitée par une surface moletée (26) destinée à venir contact avec le porteur (12).

11. Procédé de fabrication d'un câble (10) selon l'une quelconque des revendications 4-6, **caractérisé en ce que** l'on forme les stries (20) d'augmentation de frottement ou d'adhérence sur les tubes (14) ou le porteur (12) et les tubes (14), à l'aide de moyens (22) de moletage de cet élément.

12. Procédé selon la revendication 11, **caractérisé en ce que** le porteur (12) est fabriqué dans un matériau composite comprenant de la résine et des fibres de verre et **en ce que** le moletage est réalisé sur la surface externe de ce porteur (12) ramollie par chauffage de cette surface externe du porteur (12) ou chauffage des moyens de moletage (22).

13. Procédé selon la revendication ou 12, **caractérisé en ce que** chaque tube (14) étant en matériau synthétique, le moletage est réalisé sur la surface externe de chaque tube (14) à la sortie d'une tête (T) d'extrusion du tube (14).

14. Procédé selon l'une quelconque des revendications 11 à 13, **caractérisé en ce que** les moyens de moletage comprennent au moins une roue (22) de moletage munie d'une gorge périphérique (24) délimitée par une surface moletée (26) destinée à venir contact avec l'élément choisi parmi le porteur (12) et les tubes (14).

## Claims

1. Cable (10) of optical fibres (16) which comprises a sheath (18) accommodating the optical fibres (16) and at least one filamentary strength member (12) of material having a low coefficient of expansion embedded in the sheath (18), which has an elevated coefficient of expansion, **characterised in that** the strength member (12) is provided with striations (20), formed by knurling, increasing friction or adhesion between the strength member (12) and the sheath (18) surrounding it.

2. Cable (10) according to claim 1, **characterised in that** it comprises an assembly of at least two tubes (14), in which the optical fibres (16) are accommodated, the assembly of tubes (14) being accommodated within the sheath (18).

3. Cable (10) according to claim 2, **characterised in that** the tubes (14) extend within the sheath (18) in a helical or SZ arrangement.

4. Cable (10) of optical fibres (16) which comprises at least two tubes (14), in which the optical fibres (16) are accommodated, and at least one filamentary strength member (12) of material having a low coefficient of expansion in contact longitudinally with the tubes (14), said tubes (14) being assembled around the strength member (12), **characterised in that** the tubes (14) or the strength member (12) and the tubes (14) each have an outer contact surface provided with striations (20) increasing friction or adhesion between the strength member (12) and the tubes (14).

5. Cable (10) according to claim 4, **characterised in that** the tubes (14) extend around the strength member (12) in a helical or SZ arrangement.

6. Cable (10) according to claim 4 or 5, **characterised in that** the strength member (12) is provided with striations (20) increasing friction with the tubes (14).

7. Method of producing a cable (10) according to any one of claims 1- 3, **characterised in that** the striations (20) increasing friction or adhesion are formed on the strength member (12) with the aid of means (22) for knurling the strength member (12).

8. Method according to claim 7, **characterised in that** the strength member (12) is made of a composite material comprising resin and glass fibres, and **in that** the knurling is carried out on the outer surface of that strength member (12) softened by heating of that outer surface of the strength member (12) or by heating of the knurling means (22).

9. Method according to claims 8 or 9, **characterised in that** each tube (14) is of synthetic material.

10. Method according to any one of claims 7 to 9, **characterised in that** the knurling means comprise at least one knurling wheel (22) provided with a peripheral groove (24) bounded by a knurled surface (26) intended to come into contact with the strength member (12).

11. Method of producing a cable (10) according to any one of claims 4 - 6, **characterised in that** the striations (20) increasing friction or adhesion are formed on the tubes (14) or the strength member (12) and the tubes (14) with the aid of means (22) for knurling that element.

12. Method according to claim 11, **characterised in that** the strength member (12) is made of a composite material comprising resin and glass fibres, and **in that** the knurling is carried out on the outer surface of that strength member (12) softened by heating of that outer surface of the strength member (12) or by heating of the knurling means (22).

13. Method according to claim 11 or 12, **characterised in that**, each tube (14) being of synthetic material, the knurling is carried out on the outer surface of each tube (14) at the exit from an extrusion head (T) for the tube (14).

14. Method according to any one of claims 11 to 13, **characterised in that** the knurling means comprise at least one knurling wheel (22) provided with a peripheral groove (24) bounded by a knurled surface (26) intended to come into contact with the element selected from the strength member (12) and the tubes (14).

## Patentansprüche

1. Kabel (10) mit Lichtwellenleiter (16), umfassend einen Mantel (18), der eine Lagerung für die Lichtwellenleiter (16) bildet, und mindestens ein fadenförmiges Stützelement (12) aus einem Material mit niedrigem Ausdehnungskoeffizienten, das In dem Mantel (18) mit hohem Ausdehnungskoeffizienten eingelassen ist, **dadurch gekennzeichnet, dass** das Stützelement (12) mit Riefen (20), die durch Rändelung gebildet sind, zur Erhöhung der Reibung oder des Kraftschlusses zwischen dem Stützelement (12) und dem ihn umgebenden Mantel (18) versehen Ist.

2. Kabel (10) nach Anspruch 1, **dadurch gekennzeichnet, dass** es einen Verbund von mindestens zwei Schutzrohren (14) umfasst, in denen die Lichtwellenleiter (16) lagern, wobei der Schutzrohrverbund (14) In dem Mantel (18) gelagert ist.

3. Kabel (10) nach Anspruch 2, **dadurch gekennzeichnet, dass** die Schutzrohre (14) sich In dem Mantel (18) gemäß einer schraubenförmigen oder SZ-förmlgen Verbindung erstrecken.

4. Kabel (10) mit Lichtwellenleiter (16), umfassend mindestens zwei Schutzrohre (14), in denen die Lichtwellenleiter (16) lagern, und mindestens einem fadenförmigen Stützelement (12) aus einem Material mit niedrigem Ausdehnungskoeffizienten, das sich längs In Kontakt mit den Schutzrohren (14) befindet, wobei die Schutzrohre (14) um das Stützelement (12) herum angeordnet sind, **dadurch gekennzeichnet, dass** die Schutzrohre (14) oder das Stützelement (12) und die Schutzrohre (14) jeweils eine äußere Kontaktfläche aufweisen, die mit Riefen (20) zur Erhöhung der Reibung oder des Kraftschlusses zwischen dem Stützelement (12) und den Schutzrohren (14) versehen Ist.

5. Kabel (10) nach Anspruch 4, **dadurch gekennzeichnet, dass** die Schutzrohre (14) sich um das Stützelement (12) herum gemäß einer schraubenförmigen oder SZ-förmlgen Verbindung erstrecken.

6. Kabel (10) nach Anspruch 4 oder 5, **dadurch gekennzeichnet, dass** das Stützelement (12) mit Riefen (20) zur Erhöhung der Reibung mit den Schutzrohren (14) versehen ist.

7. Verfahren zur Herstellung eines Kabels (10) nach einem der Ansprüche 1 bis 3, **dadurch gekennzeichnet, dass** Riefen (20) zur Erhöhung der Reibung oder des Kraftschlusses auf dem Stützelement (12) mithilfe von Mitteln (22) zur Rändelung des Stützelements (12) gebildet werden.

8. Verfahren nach Anspruch 7, **dadurch gekennzeichnet, dass** das Stützelement (12) aus einem Verbundwerkstoff, der Harz und Glasfasern aufweist, hergestellt Ist, und dass die Rändelung auf der Außenfläche dieses Stützelements (12) erfolgt, die durch Erhitzung dieser Außenfläche des Stützelements (12) oder durch Erhitzung der Rändelungsmittel (22) welch gemacht ist.

9. Verfahren nach Anspruch 8 oder 9, **dadurch gekennzeichnet, dass** jedes Schutzrohr (14) aus Kunststoff Ist.

10. Verfahren nach einem der Ansprüche 7 bis 9, **dadurch gekennzeichnet, dass** die Rändelungsmittel mindestens ein Rändelrad (22) aufweisen, das mit einer umlaufenden Nut (24), die begrenzt Ist durch eine gerändelte Fläche (26), die in Berührung mit dem Stützelement (12) kommen soll.

11. Verfahren zur Herstellung eines Kabels (10) nach einem der Ansprüche 4 bis 6, **dadurch gekennzeichnet, dass** Riefen (20) zur Erhöhung der Reibung oder des Kraftschlusses auf den Schutzrohren (14) oder dem Stützelement (12) und den Schutzrohren (14) mithilfe von Mitteln (22) zur Rändelung dieses Elements gebildet sind.

12. Verfahren nach Anspruch 11, **dadurch gekennzeichnet, dass** das Stützelement (12) aus einem Verbundwerkstoff, der Harz und Glasfasern aufweist, hergestellt ist, und dass die Rändelung auf der Außenfläche dieses Stützelements (12) erfolgt, die durch Erhitzung dieser Außenfläche des Stützelements (12) oder durch Erhitzung der Rändelungsmittel (22) weich gemacht ist.

13. Verfahren nach Anspruch 11 oder 12, **dadurch gekennzeichnet, dass** jedes Schutzrohr (14) aus Kunststoff Ist und die Rändelung auf der Außenfläche jedes Schutzrohrs (14) am Ausgang eines Spritzkopfs (T) des Schutzrohrs (14) erfolgt.

14. Verfahren nach einem der Ansprüche 11 bis 13, **dadurch gekennzeichnet, dass** die Rändelungsmittel mindestens ein Rändelrad (22), das mit einer umlaufenden Nut (24), die begrenzt ist durch eine gerändelte Fläche (26), die in Berührung mit dem aus dem Stützelement (12) und den Schutzrohren (14) ausgewählten Element kommen soll, umfassen.
